Europäisches Patentamt

European Patent Office

Office européen des brevets

(19)

(11) Publication number: **0 116 735**
**B1**

# (12) EUROPEAN PATENT SPECIFICATION

(45) Date of publication of patent specification: **15.03.89**

(21) Application number: **83300798.2**

(22) Date of filing: **17.02.83**

(51) Int. Cl.⁴: **F 16 K 11/02**, F 16 K 47/04, C 10 G 9/00

(54) A high pressure letdown valve.

(43) Date of publication of application:
**29.08.84 Bulletin 84/35**

(45) Publication of the grant of the patent:
**15.03.89 Bulletin 89/11**

(84) Designated Contracting States:
**DE FR GB IT NL**

(56) References cited:
**CH-A- 315 263**
**CH-A- 423 391**
**DE-A-2 104 478**
**US-A-2 093 588**

(73) Proprietor: **Exxon Research and Engineering Company**
**P.O.Box 390 180 Park Avenue**
**Florham Park New Jersey 07932 (US)**

(72) Inventor: **Platt, Robert John**
**57 Grist Mill Road**
**Randolph Township New Jersey (US)**

(74) Representative: **Somers, Harold Arnold et al**
**ESSO Engineering (Europe) Ltd. Patents & Licences Apex Tower High Street**
**New Malden Surrey KT3 4DJ (GB)**

Courier Press, Leamington Spa, England.

# Description

### Field of the invention

The invention relates to a letdown valve for visbreaker processing of liquids, and more particularly to a letdown valve which will provide a smooth flow of effluent from a visbreaker furnace.

### Background of the invention

Visbreaking is a thermal cracking process for converting heavy asphalt-like distillates into lighter, more commercial products, such as fuel oil. Visbreaking is accomplished in a furnace operating at pressures of from 400 to 1,600 psig (2758 to 11032 kPa gauge), and temperatures of 700 to 900°F (371.1 to 482.2°C).

Effluent from the furnace is passed through a letdown valve, where the pressure and temperature are each drastically reduced. The severe reduction of the pressure and temperature makes extreme requirements upon the design and operation of the letdown valve. If the letdown valve is not designed properly, the flow of the furnace effluent will back-up into the furnace or the valve will fail.

The letdown valve of this invention as described and claimed herein depressurizes and cools the furnace effluent, and maintains a smooth flow of the liquid such that noise and turbulence are reduced as compared to other valve types.

As the effluent passes through the throat of the valve, the liquid is throttled, and a portion is caused to flash to vapor, the vapor having a greater volume than the liquid, is then the controlling factor in the proper hydrodynamic design of the valve. In order to obtain continuous back-up-free flow, the valve of this invention features vapor leaving the outlet of the valve at subsonic speed, during operation. The valve of the invention has been designed to give the outlet diameter sufficient width to obtain subsonic flow under all process conditions.

The valve of the invention also features a unique quenching design for quenching the high temperature liquid.

### Discussion of related art

CH—A—423191 describes and claims a steam converting valve in which the steam is cooled by the injection of water on the outlet side and there is provided an extending flow zone at its adjustable valve opening area, characterized by the fact that the extension of the flow zone is so great that expansion of the steam causes the steam pressure to fall to a level which is considerably below that required to eject the steam at subsonic velocity, that at the end of this flow zone there is provided an obstacle and/or a concave edge to produce the deficient pressure by compression shock and that means are provided to inject cooling water directly-in front of the compression front. Throttle slits are provided in the valve shaft for supplying the cooling water, and the throttle slits are helical.

### Brief summary of the invention

The invention pertains to a letdown valve for reducing the pressure of a liquid, particularly in visbreaking service.

The present invention provides a visbreaker letdown valve for reducing the pressure of a hydrocarbon liquid comprising means defining a flow path for fluid through the valve and having a high pressure inlet for liquid, a valve throat for receiving liquid from the inlet and for throttling liquid thereby to cause at least some liquid to flash into vapor, a low pressure outlet for the discharge of fluid from the valve, a movable elongated cylindrical plug disposed in said valve opposite the throat, bushing means including an end portion projecting into said flow path for supporting and guiding the plug for movement parallel to its axis towards and away from the throat, channels being formed in the plug and arranged concentrically with respect to the axis of the plug for introducing a quenching fluid into the said flow path, characterized by a divergent diffusing space directly connecting the throat and the outlet and constituting a smooth transition region between the throat and the outlet, by the channels extending parallel to the axis of the plug, and further, by the fact that each channel terminates at the end of the plug in a curved vent portion which serves to direct quenching fluid radially outwards into the fluid flow path adjacent to the corresponding end portion of the bushing means.

To the best of our knowledge, this is the first time an operative letdown valve has been designed for visbreaker process, wherein a portion of the furnace effluent is throttled to a vapor without incurring the previously normal problems of damaging vibration and noise.

The quenching fluid is introduced in the bonnet portion of the letdown valve and then passes through the plug.

It is an object of this invention to provide an improved letdown valve for a visbreaking process;

It is another object of the invention to provide a visbreaker letdown valve which introduces quenching fluid into the flow path stream;

It is a further object of this invention to provide a letdown valve for a visbreaker process wherein the furnace effluent is throttled to a vapor in the throat of the valve, and the vapor exits at subsonic velocity to prevent effluent from backing-up at the inlet.

These and other objects of this invention will be better understood and will become more apparent with reference to the following detailed description, considered in conjunction with the accompanying drawings.

### Brief description of the drawings

Figure 1 is a sectional view of the visbreaker letdown valve of this invention;

Figure 2 is a perspective, partial cutaway view of the inventive valve of Figure 1; and

Figure 3 is a plan view of a rotational restraining plate for the plug of the inventive valve of Figure 1.

## Detailed description of the invention

Generally speaking, the invention features a smooth flowing visbreaker letdown valve featuring a quenching and throttling of furnace effluent.

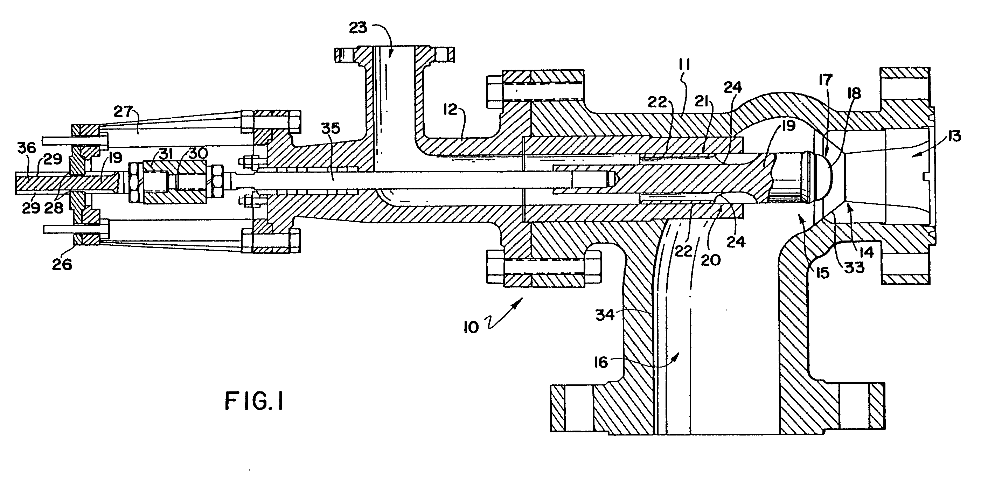

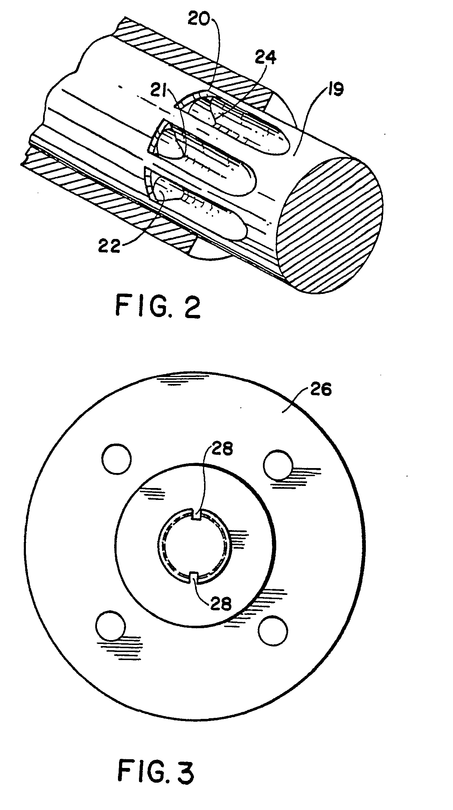

Now referring to Figures 1 and 2, a valve 10 is shown having a lower valve body 11 and an upper bonnet section 12.

The lower body section 11 of valve 10 has an inlet 13, which receives the furnace effluent at pressures of between 400 and 1,600 psig (2758 and 11032 kPa gauge) and temperatures of approximately 700 to 900°F (371.1 to 482.2°C).

The effluent enters the inlet 13 and is throttled as it flows past throat area 14. The effluent liquid will partially flash into a vapor as it exits the throat area and enters the diffusing area 15 of the valve. The vapor exits the outlet 16 of the valve at subsonic velocity due to the wide diameter of outlet 16. It will be noted that the outlet 16 is almost twice the diameter of the inlet 13. The exiting of the vapor and liquid of the effluent from outlet 16 at subsonic speed assures that the furnace effluent will not back-up into the furnace. Also, the inventive design insures a steady flow and minimum pressure recovery which is quieter than other similar flow designs.

A movable plug 17 is disposed adjacent the throat area 14, and is used to control the flow across the throat 14. The flow will generally surround the plug 17 as the liquid diffuses upon exiting the throat.

The plug 17 comprises a head portion 18 for controlling flow through the throat area 14 and a shank 19, stem 35, turnbuckle 31 and spindle 36. The shank 19 is guided and supported for movement by a bushing 20. The bushing 20 generally has a length sufficient to support the shank 19 from breaking but not so long that coke build-up on the internal wall surfaces 21 of the bushing 20 will cause binding of the shank 19 against movement. The bushing contact will generally have a length to diameter ratio of approximately 1.5.

The shank 19 has a plurality of channels 22 concentrically arranged, therein, and which run completely through the shank 19. The channels convey quenching fluid from the quenching fluid inlet 23 in the bonnet 12.

The channels each terminate in curved vents 24, which direct the quenching fluid into the diffusing flow path of the furnace effluent.

The plug 17 is generally moved by a gear-reduced motor drive (not shown). In order to prevent the rotation of the spindle 36 as it is moved within the valve body, a retaining ring 26 is bolted in place in a yoke portion 27 of the valve 10, which itself is bolted to bonnet 12.

The retaining ring 26 has two permanent keys 28 which align with keyway grooves 29 of spindle 36.

The spindle 36 is joined to the stem 35. A turnbuckle 31 connects the spindle and stem portions of plug 17. This turnbuckle prevents failure of the shank 19 and stem 35 from vibrational causes and allows continuous vertical adjustment of shank length and hence plug contact with the valve seat even when the plug is mounted within the valve.

Both the retaining ring 26 and the turnbuckle 31 prevent undue strain from being exerted upon spindle 36. Such strain was often a cause of failure in earlier designs.

In order to prevent coke build-up and erosion damage to internal diffuser area surfaces, the walls 33 of the diffuser area 15 are coated with Stellite. The outlet walls 34 are coated with tungsten carbide to prevent erosion by the rapidly moving gases and liquid. The head 18 of plug 17 is also coated with stellite to prevent coke build-up thereon.

## Claims

1. A visbreaker letdown valve for reducing the pressure of a hydrocarbon liquid comprising means (11) defining a flow path for fluid through the valve and having a high pressure inlet (13) for liquid, a valve throat (14) for receiving liquid from the inlet (13) and for throttling liquid thereby to cause at least some liquid to flash into vapor, a low pressure outlet (16) for the discharge of fluid from the valve, a movable elongated cylindrical plug (17) disposed in said valve opposite the throat, bushing means (20) including an end portion projecting into said flow path for supporting and guiding the plug (17) for movement parallel to its axis towards and away from the throat (14), channels (22) being formed in the plug (17) and arranged concentrically with respect to the axis of the plug for introducing a quenching fluid into the said flow path, characterized by a divergent diffusing space (15) directly connecting the throat (14) and the outlet (16) and constituting a smooth transition region between the throat (14) and the outlet (16), by the channels (22) extending parallel to the axis of the plug, and further, by the fact that each channel (22) terminates at the end of the plug in a curved vent portion (24) which serves to direct quenching fluid radially outwards into the fluid flow path adjacent to the corresponding end portion of the bushing means (20).

2. A valve as in claim 1 wherein said valve throat (14) includes a convergent portion upstream of said throat and a divergent portion downstream of said throat.

3. A valve as in claim 1 or claim 2 wherein said plug further includes a convex domed end portion (18) adjacent to said throat.

4. A valve as in any one of claims 1 to 3 wherein said plug includes a stem (35) and spindle (36), and there are means (26, 28, 29) for preventing said spindle from rotating.

5. A valve as in any one of claims 1 to 4 wherein said plug includes an elongated stem, and means are provided for adjusting the lift position of said plug.

6. A valve as in any one of claims 1 to 5 wherein said valve outlet (16) has a cross-sectional area relative to said throat area (14) and differential pressure across said valve to provide for a subsonic flow of said vapor exiting said letdown valve.

7. A valve as in any one of claims 1 to 6 in which the high pressure valve inlet (13) is substantially at right angles to the low pressure valve outlet (16).

8. A valve as in any one of claims 1 to 7 in which the plug is arranged and/or adapted to obturate or obstruct the downstream end of the high pressure inlet (13) in one relative position of the plug and the inlet (13).

## Patentansprüche

1. Viskositätsaufbrechungs-Ablaßventil zum Reduzieren des Druckes einer Kohlenwasserstoff-Flüssigkeit, mit Mitteln (11), die einen Strömungspfad für Fluid durch das Ventil bilden und einen Hochdruckeinlaß (13) für Flüssigkeit, eine Ventilverengung (14) für die Aufnahme der Flüssigkeit von dem Einlaß (13) und zum Drosseln der Flüssigkeit aufweisen, damit zumindest etwas Flüssigkeit in Dampf übergeht, mit einem Niederdruckauslaß (16) zum Auslassen des Fluids aus dem Ventil, mit einem bewegbaren, länglichen zylindrischen Stopfen (17), der in dem Ventil gegenüber von der Verengung angeordnet ist, mit Buchsenmitteln (20) einschließlich eines Endabschnitts, der in den Strömungspfad ragt und zum Halten und Führen des Stopfens (17) zur Bewegung parallel zu seiner Achse in Richtung auf die Verengung (14) und davon weg dient, mit Kanälen (22), die in dem Stopfen (17) gebildet und in bezug auf die Achse des Stopfens konzentrisch angeordnet sind, um ein Abschrenkungsfluid in besagten Strömungspfad einzuleiten, gekennzeichnet durch einen divergierenden Diffusionsraum (15), der unmittelbar die Verengung (14) und den Auslaß (16) verbindet und einen glatten Übergangsbereich zwischen der Verengung (14) und dem Auslaß (16) bildet, ferner dadurch, daß die Kanäle (22) parallel zu der Achse des Stopfens verlaufen, und ferner durch die Tatsache, daß jeder Kanal (22) am Ende des Stopfens in einem gekrümmten Ablaßabschnitt (24) endet, der dazu dient, Abschreckungsfluid radial nach außen in den Fluidströmungspfad neben dem entsprechenden Endabschnitt des Buchenmittels (20) zu leiten.

2. Ventil nach Anspruch 1, wobei die Ventilverengung (14) einen konvergierenden Abschnitt stromaufwärts von der Verengung und einen divergierenden Abschnitt stromabwärts von der Verengung aufweist.

3. Ventil nach Anspruch 1 oder Anspruch 2, wobei der Stopfen ferner einen konvex gekrümmten Endabschnitt (18) in der Nähe der Verengung aufweist.

4. Ventil nach einem der Ansprüche 1 bis 3, wobei der Stopfen eine Stange (35) und eine Spindel (36) aufweist, und daß Mittel (26, 28, 29) vorgesehen sind, die ein Drehen der Spindel verhindern.

5. Ventil nach einem der Ansprüche 1 bis 4, wobei der Stopfen eine längliche Stange aufweist und Mittel vorgesehen sind, um die Hubpostion des Stopfens einzustellen.

6. Ventil nach einem der Ansprüche 1 bis 5, wobei der Ventilauslaß (16) eine Querschnittsfläche in bezug auf die Verengungsfläche (14) und einen Differenzdruck über das Ventil hat, um eine Unterschallströmung für den aus dem Reduzierventil ausströmenden Dampf zu erzeugen.

7. Ventil nach einem der Ansprüche 1 bis 6, bei dem der Hochdruck-Ventileinlaß (13) im wesentlichen unter rechtem Winkel zu dem Niederdruck-Ventilauslaß (16) steht.

8. Ventil nach einem der Ansprüche 1 bis 7, bei dem der Stopfen angeordnet und/oder gestaltet ist, um das stromabwärtige Ende des Hochdruckeinlasses (13) in einer Relativposition von Stopfen und Einlaß (13) zu verschließen oder zu behindern.

## Revendications

1. Une soupape de détente pour craquage forcé destinée à réduire la pression d'un hydrocarbure liquide, comportant des moyens (11) définissant un trajet d'écoulement pour fluide à travers la soupape et présentant une ouverture pour pression élevée (13) pour liquide, un étranglement de soupape (14) pour recevoir le liquide de l'ouverture (13) et pour étrangler le liquide de façon à faire qu'au moins une partie du liquide se transforme instantanément en vapeur, une sortie basse pression (16) pour la sortie du fluide la soupape, un obturateur cylindrique oblong mobile (17) disposé dans la soupape à l'opposé de l'étranglement, des moyens de coussinet (20) comportant une partie terminale se prolongement dans ledit trajet d'écoulement pour supporter et guider l'obturateur (17) pour qu'il se déplace parallèlement à son axe vers et loin de l'étranglement (14), des canaux (22) étant ménagés dans l'obturateur (17) et agencés concentriquement par rapport à l'axe de l'obturateur pour introduire un fluide de refroidissement dans ledit trajet d'écoulement, caractérisée par un espace de diffusion divergent (15) reliant directement l'étranglement (14) et la sortie (16) et constituant une région de transition unie entre l'étranglement (14) et la sortie (16), par les canaux (22) s'étendant parallèlement à l'axe de l'obturateur, et en outre par le fait que chaque canal (22) se termine à l'extrémité de l'obturateur par une partie d'évent incurvée (24) qui sert à diriger le fluide de refroidissement radialement vers l'extérieur dans le trajet d'écoulement de fluide adjacent à la partie d'extrémité correspondante des moyens de coussinet (20).

2. Une soupape selon la revendication 1, dans laquelle ledit étranglement de soupape (14) comprend une partie convergente en amont dudit étranglement et une partie divergente en aval dudit étranglement.

3. Une soupape selon la revendication 1 ou la revendication 2, dans laquelle ledit obturateur comprend en outre une partie terminale convexe en forme de dôme (18) adjacent dudit étranglement.

4. Une soupape selon l'une quelconque des revendications 1 à 3, dans laquelle ledit obturateur comprend une tige (35) et une broche (36), et que sont prévus des moyens (26, 28, 29) pour éviter une rotation de ladite broche.

5. Une soupape selon l'une quelconque des revendications 1 à 4, dans laquelle ledit obturateur comprend une tige oblongue, et des moyens sont prévus pour régler la position levée dudit obturateur.

6. Une soupape selon l'une quelconque des revendications 1 à 5, dans laquelle ladite sortie de soupape (16) présente une section transversale par rapport à ladite zone d'étranglement (14), et une pression différentielle à travers ladite soupape pour fournir un écoulement subsonique de ladite vapeur sortant de ladite soupape de détente.

7. Une soupape selon l'une quelconque des revendications 1 à 6, dans laquelle l'entrée haute pression de la soupape (13) est sensiblement à angle droit avec la sortie basse pression de la soupape (16).

8. Une soupape selon l'une quelconque des revendications 1 à 7, dans laquelle l'obturateur est agencé et/ou adapté pour obturer ou obstruer l'extrémité aval de l'ouverture haute pression (13) dans une position relative de l'obturateur et de l'ouverture (13).

FIG.1

FIG. 2

FIG. 3